# EUROPÄISCHE PATENTSCHRIFT

(11) **EP 3 273 215 B1**
(45) Veröffentlichungstag und Bekanntmachung des Hinweises auf die Patenterteilung: **05.09.2018**
(21) Anmeldenummer: 16180009.9
(22) Anmeldetag: 18.07.2016
(51) Int. Cl.: G01L 19/06

(54) **RELATIVDRUCKSENSOR**
RELATIVE PRESSURE SENSOR
CAPTEUR DE PRESSION RELATIVE

(43) Veröffentlichungstag der Anmeldung: 24.01.2018
(73) Patentinhaber: VEGA Grieshaber KG, 77709 Wolfach (DE)
(72) Erfinder: Ilg, Thomas, 77716 Haslach (DE)
(74) Vertreter: Westphal, Mussgnug & Partner Patentanwälte mbB

(56) Entgegenhaltungen:
- EP-A2- 0 356 777
- WO-A2-03/058186
- DE-A1-102011 005 274
- DE-U1-202006 016 225

## Beschreibung

Die vorliegende Erfindung betrifft einen Relativdrucksensor gemäß dem Oberbegriff des Patentanspruchs 1.

Aus dem Stand der Technik sind Relativdrucksensoren zum Erfassen eines Prozessdrucks mit einer Relativdruckmesszelle mit einer Messkammer, die vorderseitig durch eine drucksensitive Membran und rückseitig durch einen Grundkörper begrenzt ist, wobei die Membran umlaufend an dem Grundkörper befestigt ist, bekannt. Rückseitig zu der Relativdruckmesszelle ist bei den anmeldungsgegenständlichen Relativdrucksensoren ein als Elektronikgehäuse bezeichnetes Kunststoffgehäuses zur Aufnahme einer Messelektronik angeordnet, wobei der Relativdrucksensor eine Druckausgleichsleitung aufweist, mittels derer die Messkammer der Relativdruckmesszelle mit einem Umgebungsdruck in Verbindung steht. Auf diese Weise wird erreicht, dass ein prozessseitig auf die drucksensitive Membran einwirkender Prozessdruck in Relation zu dem Umgebungsdruck erfasst wird.

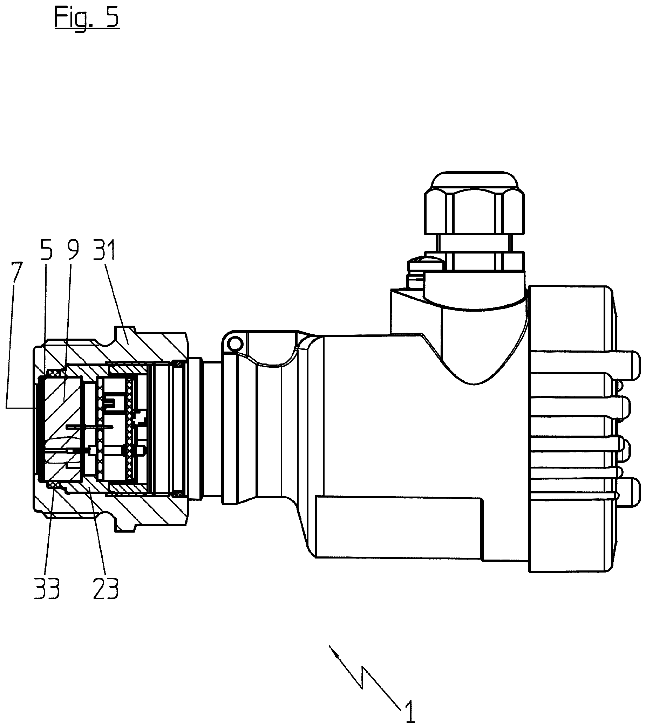

Ein solcher Relativdrucksensor ist in Figur 5 dargestellt. Bei dem in Figur 5 gezeigten Relativdrucksensor 1 ist eine Druckausgleichsleitung 13 als sog. Kapillare 14, d. h. als dünnes Röhrchen aus einer Relativdruckmesszelle 3 in ein Elektronikgehäuse 11 geführt. Dort wird die Druckausgleichsleitung 13 mittels eines Schlauches der Umgebungsluft zugeführt.

Bei den eingangs bezeichneten Relativdrucksensoren kommt es aufgrund der natürlich herrschenden Luftfeuchtigkeit durch Verdampfungs- und Kondensationseffekte, die aufgrund von Temperaturunterschieden mit der Zeit auftreten können dazu, dass in der Messkammer Luftfeuchtigkeit kondensiert und damit Messergebnisse verfälscht oder im schlimmsten Fall die in der Messkammer angeordneten Messelektroden kurzgeschlossen werden.

Ferner wird es als Nachteil empfunden, dass die Druckausgleichsleitung durch zusätzliche Schläuche oder Röhrchen innerhalb des Relativdrucksensors realisiert werden muss, so dass eine Vielzahl von unterschiedlichen Bauelementen benötigt wird.

Hier setzt die vorliegende Erfindung an.

Eine erfindungsgemäße Relativdruckmesszelle zum Erfassen eines Prozessdrucks weist eine Relativdruckmesszelle mit einer Messkammer, die vorderseitig durch eine drucksensitive Membran und rückseitig durch einen Grundkörper begrenzt ist, wobei die Membran umlaufend an dem Grundkörper befestigt ist, sowie ein rückseitig zu der Relativdruckmesszelle angeordnetes, zylindrisch ausgebildetes Elektronikgehäuse für eine Messelektronik auf, wobei der Relativdrucksensor eine Druckausgleichsleitung aufweist, mittels derer die Messkammer mit einem Umgebungsdruck in Verbindung steht und wobei die Druckausgleichsleitung wenigstens abschnittsweise innerhalb einer Seitenwandung des Elektronikgehäuses geführt ist, wobei die Seitenwandung parallel zu einer Symmetrieachse zu einem dem Grundkörper der Relativdruckmesszelle abgewandten Ende des Elektronikgehäuses verläuft.

Solche Relativdruckmesszellen sind beispielweise aus WO 03/058186 A2 oder DE 10 2011 005 274 A1 bekannt. Insbesondere offenbart WO 03/058186 A2 als Druckausgleichsleitung einen gewundenen Referenzluftpfad, der auf einer Oberfläche eines Topfes der Druckmesszelle läuft und durch eine axiale Öffnung mit der Messkammer verbunden ist. Die Druckausgleichsleitung der DE 10 2011 005 274 A1 ist als ein keramisches Kapillarrohr gebildet, das durch einen Kapselkörper der Druckmesszelle hindurchläuft.

Innerhalb der Seitenwandung bedeutet im Sinne der vorliegenden Anmeldung, dass die Druckausgleichsleitung wenigstens teilweise im Material der Seitenwandung verläuft.

Dadurch, dass die Druckausgleichsleitung wenigstens abschnittsweise innerhalb der Seitenwandung des Elektronikgehäuses geführt ist wird erreicht, dass zur Realisierung der Druckausgleichsleitung keine zusätzlichen separaten Bauteile benötigt werden und auf diese Weise eine lateral zur Seitenwandung nach innen versetzte Reduktion der notwendigen Bauteile erreicht werden kann.

Wird die Druckausgleichsleitung wenigstens abschnittsweise als Kanal in der Ebene der Seitenwandung ausgeführt, so kann ferner erreicht werden, dass die Druckausgleichsleitung ohne zusätzliche Bauelemente an eine vom Prozess abgewandte Seite des Elektronikgehäuses geführt und platzsparend in das Elektronikgehäuse integriert werden kann.

Der erfindungsgemäße Relativdrucksensor zeichnet sich dadurch aus, dass die Druckausgleichsleitung wenigstens abschnittsweise als vorzugsweise nach außen offene Nut in der Seitenwandung des Elektronikgehäuses ausgebildet und mit einem Verschlussmittel abgeschlossen ist. Auf diese Weise kann durch eine sehr einfache Veränderung des Elektronikgehäuses, dass vorzugsweise in einem Spritzgussverfahren aus Kunststoff hergestellt ist, eine Ausbildung der Druckausgleichsleitung realisiert werden.

Insbesondere ermöglicht eine derartige Ausgestaltung, dass die Druckausgleichsleitung bereits beim Spritzguss in das Elektronikgehäuse eingebracht und anschließend durch das Verschlussmittel gegenüber der Umgebung abgeschlossen wird.

Um ein Eindringen von Luftfeuchtigkeit in die Messkammer der Relativdruckmesszelle möglichst gering zu halten ist es vorteilhaft, wenn die Druckausgleichsleitung eine möglichst große Leitungslänge aufweist. Dies kann beispielsweise dadurch erreicht werden, dass die Nut zur Bildung der Druckausgleichsleitung in der Seitenwandung des Elektronikgehäuses mäanderförmig geführt ist. Auf diese Weise wird eine Leitungslänge der Druckausgleichsleitung erreicht, die ein Vielfaches einer Länge des Elektronikgehäuses in Axialrichtung gesehen betragen kann.

Das Elektronikgehäuse kann dafür beispielsweise zylindrisch ausgebildet und im Bereich der Druckausgleichsleitung abgeflacht sein. Auf diese Weise wird eine Außenform des Elektronikgehäuses erreicht, bei der besonders einfach ein Verschlussmittel im Bereich der Nut angebracht werden kann.

In einer besonders kostengünstigen Ausgestaltung kann das Verschlussmittel als selbstklebende, luftundurchlässige Folie ausgebildet sein, die im Bereich der Nut auf das Elektronikgehäuse aufgeklebt ist. Durch das Aufkleben einer solchen Folie ist die nach außen offene Nut zur Realisierung der Druckausgleichsleitung gegenüber der Umgebung abgedichtet und so sehr kostengünstig eine Realisierung der Druckausgleichsleitung erreicht. In einer besonders geschickten Ausgestaltungsform kann die selbstklebende, luftundurchlässige Folie ferner mit Informationen zu dem Relativdrucksensor bedruckt sein, also beispielsweise ein Typenschild darstellen.

Alternativ kann das Elektronikgehäuse wenigstens zweiteilig ausgebildet und das Verschlussmittel als einer der Gehäuseteile ausgebildet sein.

Das Elektronikgehäuse kann beispielsweise aus PPO (Polyphenylenoxid)gefertigt sein.

Um eine ausreichende Leitungslänge der Druckausgleichsleitung zu erreichen verläuft diese wenigstens abschnittsweise, vorzugsweise zu wenigstens 50% weiter vorzugsweise zu wenigstens 70% ihrer Länge quer, vorzugsweise senkrecht zu einer Längsachse des Relativdrucksensors.

Eine besonders gute Immunität gegen Feuchtigkeitsprobleme in der Messkammer wird erreicht, wenn die Leitungslänge der Druckausgleichsleitung ein Vielfaches, vorzugsweise wenigstens zweifaches weiter bevorzugt dreifaches einer Länge des Relativdrucksensors aufweist.

Die vorliegende Erfindung wird nachfolgend unter Bezugnahme auf die beigefügten Figuren anhand zweier Ausführungsbeispiele eingehend erläutert.

Es zeigen:
- Figur 1: eine Teilansicht eines ersten Ausführungsbeispiels eines Relativdrucksensors,
- Figur 2: den Relativdrucksensor aus Figur 1 mit abgedeckter Nut,
- Figur 3: einen Längsschnitt durch den Relativdrucksensor der Figuren 1 und 2 mit einem Gehäuse,
- Figur 4a und Figur 4b: ein zweites Ausführungsbeispiel eines Relativdrucksensors mit zylindrisch ausgebildetem Elektronikgehäuse und
- Figur 5: einen Relativdrucksensor gemäß dem Stand der Technik.

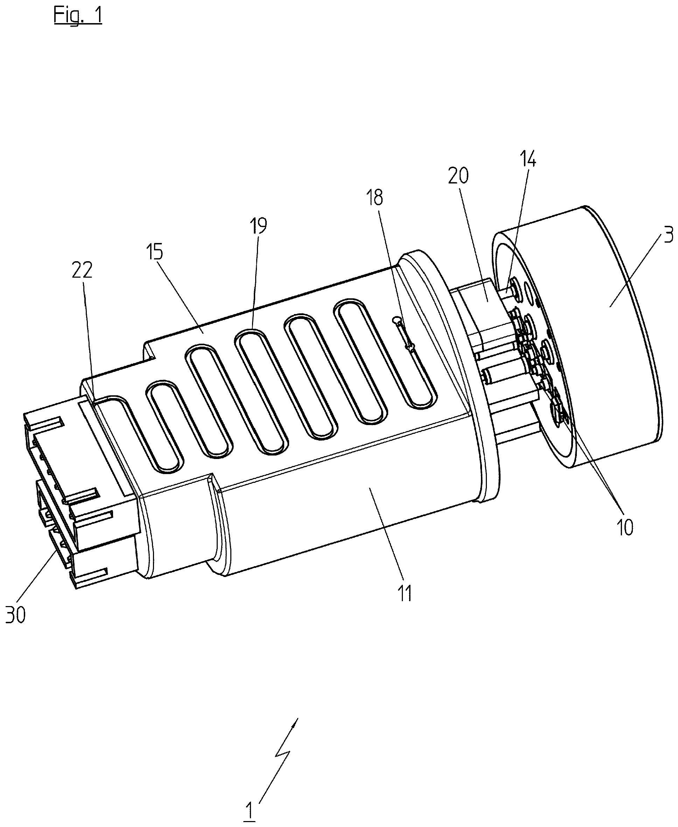

Figur 1 zeigt eine Ansicht der wesentlichen Komponenten eines Relativdrucksensors 1 gemäß der vorliegenden Anmeldung. In der Darstellung in Figur 1 sind der besseren Übersichtlichkeit halber ein umgebendes Sensorgehäuse sowie weitere für die vorliegende Erfindung nicht ausschlaggebende Komponenten weggelassen.

In Figur 1 ist eine kapazitiv arbeitende Relativdruckmesszelle 3 aus einem keramischen Material gezeigt, die rückseitig mit einem Elektronikgehäuse 11 verbunden ist. Neben einer Mehrzahl elektrischer Anschlüsse 10 zur Kontaktierung der in einer Messkammer 5 der Relativdruckmesszelle 3 angeordneten Elektroden ist ferner eine Kapillare 14, die mit der Messkammer 5 in Verbindung steht, über einen Dichtansatz 20 zu dem Elektronikgehäuse 11 geführt. Die Kapillare 14 ist von dem Dichtansatz 20 abdichtend umschlossen und führt in einen vorliegend nicht dargestellten Kanal 17 der durch eine Bodenwandung und innerhalb einer hier abgeflacht ausgebildeten Seitenwandung 15 des Elektronikgehäuses bis zu einer Ausgangsöffnung 18 geführt ist. An der Ausgangsöffnung 18 mündet der Kanal 17 in eine nach außen offene Nut 19, die in der Seitenwandung 15 mäanderförmig bis zu einem in Längsrichtung abgewandten Ende des Elektronikgehäuses geführt ist. Die Nut 19 endet an einem Nutende 22, das die Nut 19 in Axialrichtung A aus der Seitenwandung 15 herausführt.

An einem in Axialrichtung A gesehen hinten liegenden Ende des Elektronikgehäuses 11 sind außerdem verschiedene Steckerkontakte 30 zur Kontaktierung einer in dem Elektronikgehäuse angeordneten Sensorelektronik angeordnet.

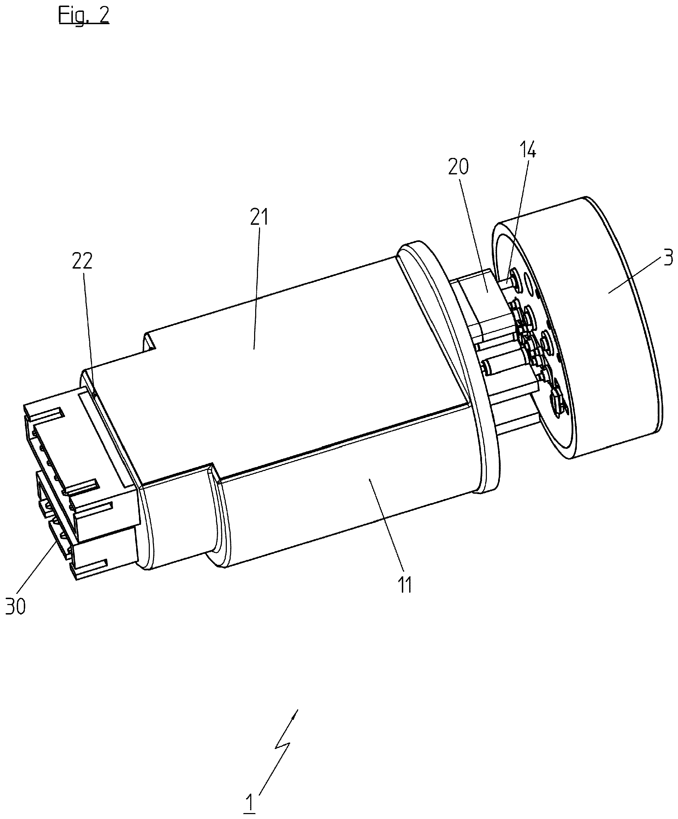

Figur 2 zeigt die Komponenten aus Figur 1, wobei auf die Seitenwandung 15 zur Abdeckung der Nut 19 als Verschlussmittel 21 eine selbstklebende Folie aufgebracht ist. Die selbstklebende Folie 21 kann beispielsweise als Typenschild ausgebildet und mit geeigneten Informationen über den Relativdrucksensor 1 bedruckt sein. Ausschlaggebend ist, dass die selbstklebende Folie luftundurchlässig ist und damit die in der Seitenwandung 15 ausgebildeten nach außen offene Nut 19 derart verschließt, dass eine nach außen geschlossene und lediglich an dem Nutende 22 dem Umgebungsdruck zugängliche Kontur geschaffen wird. Es ist auf diese Weise möglich die Druckausgleichsleitung 13 des Relativdrucksensors 1 auf kostengünstige Weise auf ein Vielfaches einer Länge des Elektronikgehäuses 11 oder des Relativdrucksensors 1 insgesamt zu verlängern und so effektiv eine Reduktion der Kondensation von Luftfeuchtigkeit durch eine Reduktion des Luftaustauschs in der Messkammer 5 zu erreichen.

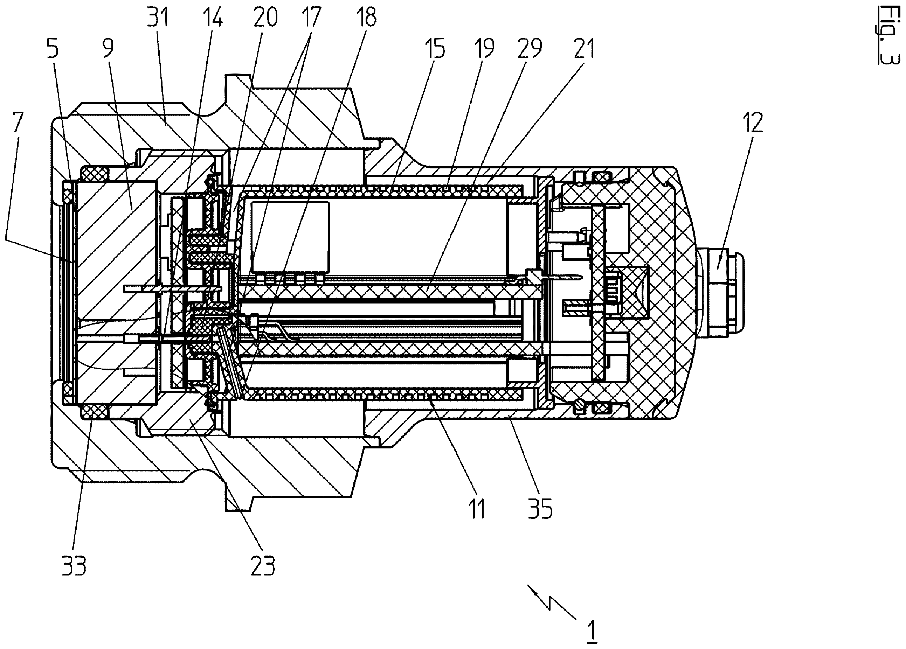

In Figur 3 ist ein Längsschnitt durch einen Relativdrucksensor 1 mit den Komponenten aus den Figuren 1 und 2 dargestellt.

In der in Figur 3 gezeigten Darstellung ist der Relativdruckmesszelle 3 über ein Übergangsstück 23 mit dem Elektronikgehäuse 11 verbunden. Die von der Folie 21 abgedeckte Nut 19 mündet, wie in Figur 3 deutlich zu erkennen ist, in die Ausgangsöffnung 18 des Kanals 17, der in der Ebene der Seitenwandung 15 zu dem Dichtansatz 20 zur abdichtenden Aufnahme der Kapillare 14, die in die Relativdruckmesszelle 3 führt, ausgebildet ist. Die im Grundkörper 9 der Relativdruckmesszelle 3 endende Kapillare mündet in einen Kanal, der mit der Messkammer 5, die sich zwischen dem Grundkörper 9 und der Membran 7 befindet verbunden ist.

Rückseitig mündet die Nut 19 mit dem Nutende 22 in einen von einem Sensorgehäuse 35 umgebenden Hohlraum, der über einen Gehäuseausgang 12 mit einem Außenbereich des Relativdrucksensors 1 in Verbindung steht. Das Sensorgehäuse ist mitsamt dem Elektronikgehäuse 11, die im Übergangsstück 23 sowie der Relativdruckmesszelle 3 in einen Prozessanschluss 31 zur Anordnung des Relativdrucksensors 1 in einer Prozessumgebung einschraubt. Zur Halterung und Abdichtung der Relativdruckmesszelle 3 in dem Prozessanschluss 31 sind verschiedene Dichtungen 33 vorderseitig und in Umfangsrichtung zwischen den einzelnen Gehäuseteilen angeordnet.

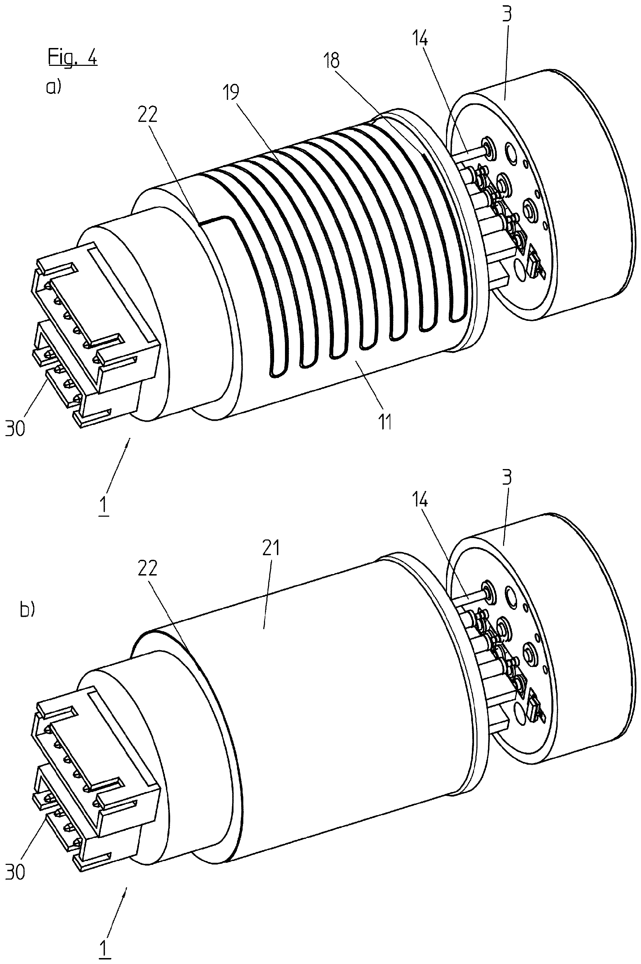

In den Figuren 4a und 4b ist ein weiteres Ausführungsbeispiel eines Relativdrucksensors 1 gemäß der vorliegenden Anmeldung dargestellt. Dargestellt sind im Wesentlichen die gleichen Komponenten wie in den Figuren 1 und 2, wobei das Elektronikgehäuse 11 im vorliegenden Ausführungsbeispiel auch im Bereich der Nut 19 zylindrisch ausgebildet ist. Die Nut 19 kann bei derartigen Ausgestaltung wie in Figur 4a dargestellt, ebenfalls mäanderförmig oder alternativ in Form einer Schraubenlinie auf dem Elektronikgehäuse 11 geführt sein. Auf diese Weise kann eine noch größere Verlängerung der Druckausgleichsleitung 13 erreicht werden.

In Figur 4b ist als Verschlussmittel 21 wiederum eine selbstklebende und luftundurchlässige Folie auf das Elektronikgehäuse 11 aufgeklebt, die die nach außen offene Nut 19 derart abschließt, dass eine lediglich an dem Nutende 22 mit der Umgebung kommunizierende Kontur erreicht wird.

### Bezugszeichenliste

- 1: Relativdrucksensor
- 3: Relativdruckmesszelle
- 5: Messkammer
- 7: Membran
- 9: Grundkörper
- 10: elektrische Anschlüsse
- 11: Elektronikgehäuse
- 12: Gehäuseausgang
- 13: Druckausgleichsleitung
- 14: Kapillare
- 15: Seitenwandung
- 17: Kanal
- 18: Ausgangsöffnung
- 19: Nut
- 20: Dichtansatz
- 21: Verschlussmittel, Folie
- 22: Nutende
- 23: Übergangsstück
- 29: Leiterplatte
- 30: Steckerkontakte
- 31: Prozessanschluss
- 33: Dichtung
- 35: Sensorgehäuse
- A: Axialrichtung

## Patentansprüche

1. Relativdrucksensor (1) zum Erfassen eines Prozessdrucks mit einer Relativdruckmesszelle (3) mit einer Messkammer (5), die vorderseitig durch eine drucksensitive Membran (7) und rückseitig durch einen Grundkörper (9) begrenzt ist und die Membran (7) umlaufend an dem Grundkörper (9) befestigt ist, sowie einem rückseitig zu der Relativdruckmesszelle (3) angeordneten, zylindrisch ausgebildeten Elektronikgehäuse (11) für eine Messelektronik, wobei der Relativdrucksensor (1) eine Druckausgleichsleitung (13) aufweist, mittels derer die Messkammer (5) mit einem Umgebungsdruck in Verbindung steht, wobei die Druckausgleichsleitung (13) wenigstens abschnittsweise innerhalb einer Seitenwandung (15) des Elektronikgehäuses (11) geführt ist, wobei die Seitenwandung (15) parallel zu einer Symmetrieachse zu einem dem Grundkörper (9) der Relativdruckmesszelle (3) abgewandten Ende des Elektronikgehäuses (11) verläuft,
**dadurch gekennzeichnet, dass**
die Druckausgleichsleitung (13) wenigstens abschnittsweise als nach außen offene Nut (19) in der Seitenwandung (15) des Elektronikgehäuses (11) ausgebildet ist und mit einem Verschlussmittel (21) abgeschlossen ist.

2. Relativdrucksensor (1) gemäß Anspruch 1,
**dadurch gekennzeichnet, dass**
die Druckausgleichsleitung wenigstens abschnittsweise als Kanal (17) in der Ebene der Seitenwandung (15) ausgeführt ist.

3. Relativdrucksensor (1) gemäß einem der vorhergehenden Ansprüche,
**dadurch gekennzeichnet, dass**
die Nut (19) mäanderförmig in der Seitenwandung (15) geführt ist.

4. Relativdrucksensor (1) gemäß einem der vorhergehenden Ansprüche,
d**adurch gekennzeichnet,** dass
das Gehäuse (12) im Bereich der Druckausgleichsleitung (13) abgeflacht ist.

5. Relativdrucksensor (1) gemäß einem der Ansprüche 1 bis 3,
**dadurch gekennzeichnet, dass**
das Verschlussmittel (21) als selbstklebende, luftundurchlässige Folie (21) ausgebildet ist, die im Bereich der Nut (19) auf das Elektronikgehäuse (11) aufgeklebt ist.

6. Relativdrucksensor (1) gemäß einem der Ansprüche 2 oder 3,
**dadurch gekennzeichnet, dass**
das Gehäuse (12) wenigstens zweiteilig ausgebildet und das Verschlussmittel (21) als einer der Gehäuseteile (12) ausgebildet ist.

7. Relativdrucksensor (1) gemäß einem der vorhergehenden Patentansprüche,
**dadurch gekennzeichne**t, dass
das Gehäuse (12) aus PPO (Polyphenylenoxid)gefertigt ist.

8. Relativdrucksensor (1) gemäß einem der vorhergehenden Ansprüche,
**dadurch gekennzeichnet, dass** die Druckausgleichsleitung (13) wenigstens abschnittsweise, vorzugsweise zu wenigstens 50 % ihrer Länge quer, vorzugsweise senkrecht zu einer Längsachse des Relativdrucksensors (1) verläuft.

9. Relativdrucksensor (1) gemäß einem der vorhergehenden Ansprüche,
**dadurch gekennzeichnet, dass** eine Länge der Druckausgleichsleitung (13) ein Vielfaches vorzugsweise das Zwei bis Dreifache, vorzugsweise ein Zweieinhalbfaches einer Länge des Relativdrucksensors (1) entspricht.

10. Relativdrucksensor (1) gemäß Anspruch 9,
**dadurch gekennzeichnet, dass** die Druckausgleichsleitung (13) eine Länge zwischen 8cm und 12 cm, vorzugsweise 10 cm aufweist.

## Claims

1. Relative pressure sensor (1) for measuring a process pressure having a relative pressure measuring cell (3) with a measuring chamber (5), which is delimited on the front side by a pressure sensitive membrane (7) and on the rear side by a base body (9) and the membrane (7) is attached circumferentially to the base body (9), as well as an electronic housing (11) for a measuring electronics arranged on the rear side of the relative pressure measuring cell (3) and designed in cylindrical shape, wherein the relative pressure sensor (1) has a pressure compensation line (13), by means of which the measuring chamber (5) communicates with an environment pressure, wherein the pressure compensation line (13) is led at least in sections inside a side wall (15) of the electronic housing (11), wherein the side wall (15) runs parallel to a symmetry axis towards an end of the electronic housing (11) facing away from the base body (9) of the relative pressure measuring cell (3),
**characterized in that**
the pressure compensation line (13) is designed at least in sections as a notch (9) in the side wall (15) of the electronic housing (11) open towards outside and is closed by a sealing means (21).

2. Relative pressure sensor (1) according to claim 1,
**characterized in that**
the pressure compensation line is formed at least in sections as a canal (17) in the plane of the side wall (15).

3. Relative pressure sensor (1) according to one of the previous claims,
**characterized in that**
the notch (19) is led in the side wall (15) in a meandering pattern.

4. Relative pressure sensor (1) according to one of the previous claims,
**characterized in that**
the housing (12) is flattened in the area of the pressure compensation line (13).

5. Relative pressure sensor (1) according to one of the claims 1 to 3
**characterized in that**
the sealing means (21) is formed as a self-adhesive film (21) impermeable to air, which is glued on the electronic housing (11) in the area of the notch (19).

6. Relative pressure sensor (1) according to one of the claims 2 or 3,
**characterized in that**
the housing (12) is formed in at least two parts and the sealing means (21) is formed as one of the parts of the housing (12).

7. Relative pressure sensor (1) according to one of the previous claims,
**characterized in that**
the housing (12) is made of PPO (polyphenylene oxide).

8. Relative pressure sensor (1) according to one of the previous claims,
**characterized in that** the pressure compensation line (13) runs at least in sections, preferably to at least 50 % of its length transversely, preferably perpendicularly to a longitudinal axis of the relative pressure sensor (1).

9. Relative pressure sensor (1) according to one of the previous claims,
**characterized in that** a length of the pressure compensation line (13) corresponds to a multiple, preferably the double to the triple, preferably two and a half times the length of the relative pressure sensor (1).

10. Relative pressure sensor (1) according to claim 9,
**characterized in that** the pressure compensation line (13) has a length between 8 cm and 12 cm, preferably 10 cm.

## Revendications

1. Capteur de pression relative (1) permettant de détecter une pression du processus possédant une cellule de mesure de pression relative (3) avec une chambre de mesure (5), qui est délimitée à l'avant par une membrane (7) sensible à la pression et à l'arrière par une corps de base (9) et la membrane (7) est attachée sur tout le pourtour au corps de base (9), ainsi qu'un boîtier électronique (11) pour une électronique de mesure arrangé à l'arrière de la cellule de mesure de pression (3) et présentant une forme cylindrique, dans lequel le capteur de pression relative (1) comprend une ligne de compensation de pression (13), à l'aide de laquelle la chambre de mesure (5) est en liaison avec une pression ambiante, dans lequel la ligne de compensation de pression (13) est menée au moins par tronçons à l'intérieur d'une paroi latérale (15) du boîtier électronique (11), dans lequel la paroi latérale (15) se déroule parallèle à un axe de symétrie vers une extrémité du boîtier électronique (11) opposée au corps de base (9) de la cellule de mesure de pression relative (3),
**caractérisé en ce que**
la ligne de compensation de pression (13) est au moins par tronçons en forme de rainure (19) ouverte vers l'extérieur et située dans la paroi latérale (15) du boîtier électronique (11) et est fermée par un moyen d'obturation (21).

2. Capteur de pression relative (1) selon la revendication 1,
**caractérisé en ce que**
la ligne de compensation de pression est au moins par tronçons en forme de canal (17) situé dans le plan de la paroi latérale (15).

3. Capteur de pression relative (1) selon l'une des revendications précédentes,
**caractérisé en ce que**
la rainure (19) est en forme de méandres dans la paroi latérale (15).

4. Capteur de pression relative (1) selon l'une des revendications précédentes,
**caractérisé en ce que**
le boîtier (12) est aplati au niveau de la ligne de compensation de pression (13).

5. Capteur de pression relative (1) selon l'une des revendications 1 à 3,
**caractérisé en ce que**
le moyen d'obturation (21) est en forme de feuille (21) autoadhésive et imperméable à l'air, qui est collée au niveau de la rainure (19) sur le boîtier électronique (11).

6. Capteur de pression relative (1) selon l'une des revendications 2 ou 3,
**caractérisé en ce que**
le boîtier (12) est formé en au moins deux parties et le moyen d'obturation (21) est conçu comme une des parties du boîtier (12).

7. Capteur de pression relative (1) selon l'une des revendications précédentes,
**caractérisé en ce que**
le boîtier (12) est réalisé en PPO (oxyde de polyphénylène).

8. Capteur de pression relative (1) selon l'une des revendications précédentes,
**caractérisé en ce que** la ligne de compensation de pression (13) se déroule au moins par tronçons, de préférence sur au moins 50 % de sa longueur transversalement, de préférence perpendiculairement à un axe longitudinal du capteur de pression relative (1).

9. Capteur de pression relative (1) selon l'une des revendications précédentes,
**caractérisé en ce que** une longueur de la ligne de compensation de pression (13) est égale à un multiple, de préférence à deux à trois fois, de préférence à deux fois et demi la longueur du capteur de pression relative (1).

10. Capteur de pression relative (1) selon la revendication 9,
**caractérisé en ce que**
la ligne de compensation de pression (13) a une longueur comprise entre 8 cm et 12 cm, de préférence 10 cm.
